(19) Europäisches Patentamt
European Patent Office
Office européen des brevets

(11) Veröffentlichungsnummer: **0 269 817 B1**

(12) **EUROPÄISCHE PATENTSCHRIFT**

(45) Veröffentlichungstag der Patentschrift: **04.12.91**

(51) Int. Cl.⁵: **B27K 3/50**, C07D 405/06

(21) Anmeldenummer: **87115129.6**

(22) Anmeldetag: **16.10.87**

Die Akte enthält technische Angaben, die nach dem Eingang der Anmeldung eingereicht wurden und die nicht in dieser Patentschrift enthalten sind.

# (54) Mittel oder Konzentrat zum Konservieren von Holz und Holzwerkstoffen.

(30) Priorität: **05.12.86 DE 3641555**

(43) Veröffentlichungstag der Anmeldung:
**08.06.88 Patentblatt 88/23**

(45) Bekanntmachung des Hinweises auf die Patenterteilung:
**04.12.91 Patentblatt 91/49**

(84) Benannte Vertragsstaaten:
**AT BE CH DE ES FR GB GR IT LI LU NL SE**

(56) Entgegenhaltungen:
**EP-A- 0 050 738**
**EP-A- 0 148 526**
**EP-A- 0 198 165**
**DE-A- 3 414 244**

(73) Patentinhaber: **DEUTSCHE SOLVAY-WERKE GMBH**
**Langhansstrasse 6 Postfach 01 02 70**
**W-5650 Solingen-Ohligs(DE)**

(72) Erfinder: **Grüning, Rainer, Dr., Dipl.-Chem.**
**Franz-Hitze-Strasse 14**
**W-4150 Krefeld 1(DE)**
Erfinder: **Metzner, Wolfgang, Dr., Dipl.-Chem.**
**Buschstrasse 151**
**W-4150 Krefeld(DE)**

(74) Vertreter: **Seiler, Siegfried**
**c/o DEUTSCHE SOLVAY-WERKE GmbH Langhansstrasse 6 Postfach 11 02 70**
**W-5650 Solingen 11(DE)**

**EP 0 269 817 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die vorliegende Erfindung betrifft ein Mittel zum Konservieren von Holz und Holzwerkstoffen auf der Basis von oder unter Mitverwendung von 1-[[2-(2,4-dichlorophenyl)-1,3-dioxolan-2-yl]methyl]-1H-1,2,4-triazol sowie ggf. eines Insektizides, Verarbeitungshilfs-und/oder Zusatzmittels, eines organischchemischen Bindemittels und/oder Fixierungsmittels, Farbstoffes, Pigmentes, Farbstoff- oder Pigmentgemisches.

Die chemische Verbindung 1 -[[2-(2.4-dichlorphenyl)-1.3-dioxolan-2-yl]methyl]-1H-1,2,4-triazol (Azaconazol) mit der Strukurformel

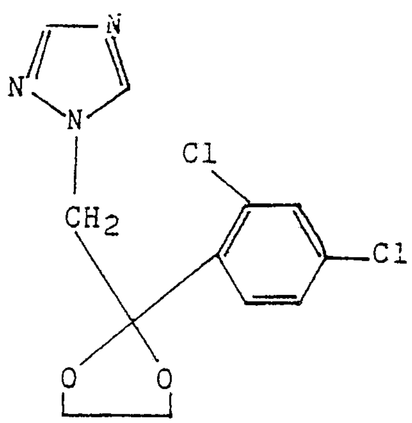

ist bereits aus der DE-PS 25 51 560 als fungizides und pflanzenwuchsregulierendes Mittel in der Landwirtschaft bekannt.

An Holzkonservierungsmittel werden jedoch Anforderungen gestellt, die von denen der Fungizide im Pflanzenschutz erheblich abweichen.

Die chemischen Verbindungen Cyano-(4-fluoro-3-phenoxyphenyl)-methyl-3-(2,2-dichloroethenyl)-2,2-dimethylcyclopropancarboxylat und (-(Pentafluorphenyl)-methyl))-1R, 3R-3-(2,2-dichlorethenyl)-2,2-dimethyl-cyclopropancarboxylat sind bereits aus der DE-OS 27 09 264 als Insektizide im Pflanzenschutz bekannt. Jedoch genügen diese hinsichtlich der Alterungsbeständigkeit und der Beständigkeit gegenüber Witterungseinflüssen nicht den Anforderungen, die an ein Holzkonservierungsmittel gestellt werden.

Aus EP-A-0 148 526 sind wasserverdünnbare Holzschutzflüssigkeiten bekannt, die Azole der darin angegebenen Struktur als Wirkbestandteil enthalten. Zusätzlich können Insektizide mitverwendet werden, ohne daß jedoch bestimmte Insektizide empfohlen oder eine zusätzliche insektizide Prüfung der Wirksamkeit der Kombination durchgeführt worden ist.

Die EP-A-0 198 165 beschreibt ein wäßriges Holzschutzmittel, in welchem der Anteil an organisch-chemischen Lösemitteln ohne Wirksamkeitsverminderung der Biozide verringert ist. Dies wird erzielt durch die Mitverwendung von Tensiden.

Die DE-A-3 414 244 beschreibt ein wäßriges Holzschutzanstrichmittel mit einer verbesserten Eindringtiefe der darin enthaltenen Biozide im behandelten Holz. Dies wird durch Zusatz einer flüssigen, ungesättigten höheren Fettsäure zum Holzschutzmittel erreicht.

Ziel und Aufgabe der vorliegenden Erfindung war es daher, ein Holzkonservierungsmittel zu finden, das gegenüber holzverfärbenden und holzzerstörenden Pilzen sowie gegenüber Termiten, hochwirksam ist und eine gute Langzeitwirkung aufweist, wobei die Wirksamkeit des Fungizids durch das Insektizid nicht beeinträchtigt wird bzw. umgekehrt. Darüber hinaus sollte das Holzkonservierungsmittel ein gutes Eindringvermögen im Holz und in den Holzwerkstoffen aufweisen.

Erfindungsgemäß wurde festgestellt, daß diesen Zielen und Aufgaben ein Mittel zum Konservieren von Holz und Holzwerkstoffen auf der Basis von oder unter Mitverwendung von 1-[[2-(2,4-dichlorphenyl)-1,3-dioxolan-2-yl]methyl]-1H-1,2,triazol sowie ggf. eines Insektizides, Verarbeitungshilfs- und/oder Zusatzmittels, eines organisch-chemischen Bindemittels und/oder Fixierungsmittels, Farbstoffes, Pigmentes, Farbstoff-oder Pigmentgemisches gerecht wird, das

0,001 - 5 Gew.-%, vorzugsweise
0,2 - 2 Gew.-%.
1-[[2-(2,4-dichlorphenyl)-1,3-dioxolan-2-yl]methyl]-1H-1,2,4-triazol
und
0,001 - 3 Gew.-%, vorzugsweise
0,2 - 2 Gew.-%,
Cyano-(4-fluoro-3-phenoxyphenyl)-methyl-3-(2,2-dichloroethenyl)-2,2-dimethylcyclopropancarboxylat, oder (-(Pentafluorphenyly)-methyl))-1R, 3R-3-(2,2-dichlorethenyl)-2,2-dimethylcyclopropancarboxylat, oder eines Cyano-(4-fluoro-3-phenoxyphenyl)-methyl-3-(2,2-dichloroethenyl)-2,2-dimethylcyclopropancarboxylat, (Pentafluorphenyl)-methyl))-1R, 3R-3-(2,2-dichlorethenyl)-2,2-dimethylcyclopropancarboxylat, mit N,N-Di-methyl-N'-phenyl-N'-(fluordichlormethyl-thio)-sulfamid oder N,N-Dimethyl-N'-p-tolyl-N'(dichlorfluormethylthio)-sulfamid und
mehr als 75 Gew.-%, vorzugsweise
mehr als 90 Gew.-%,
mindestens eines öligen oder ölartigen, schwerflüchtigen, organisch-chemischen Lösungsmittels oder Lösungsmittelgemisches enthält.

Nach einer weiteren Ausführungsform enthält das Holzkonservierungsmittel 0,1 - 25 Gew.-%, vorzugsweise 1 - 18 Gew.%, berechnet als Feststoff mindestens eines Bindemittels und/oder Fixierungsmittels.

Erfindungsgemäß beträgt nach einer Ausführungsform das Gewichtsverhältnis von Bindemittel, Fixierungsmittel und/oder eines deren Gemische zu dem Verdünnungsmittel oder Verdünnungsmittelgemisch und zu dem im Mittel enthaftenden Emulgator oder Emulgatorgemisch und/oder Netzmittel oder Netzmittelgemisch 8,5 : 1 bis 1 : 99.

Das organisch-chemische Bindemittel oder Bindemittelgemisch kann teilweise durch mindestens einen Weichmacher ersetzt sein.

Gemäß einer vorteilhatten Ausführungsform enthält das Mittel zum Konservieren von Holz
0,001 - 5 Gew.-%, vorzugsweise
0.2 - 2 Gew.-%,
1-[[2-(2.4-dichlorphenyl)-1,3-dioxolan-2-yl]methyl]-1H-1,2,4-triazol,
0,001 - 3 Gew.-%, vorzugsweise
0,2 - 2 Gew.-%,
Cyano-(4-fluoro-3-phenoxyphenyl)-methyl-3-(2,2-dichloroethenyl)-2.2-dimethylcyclopropancarboxylat (Pentafluorphenyl)-methyl))-1R, 3R-3-(2,2-dichlorethenyl)-2,2-dimethylcyclopropancarboxylat, oder eines Cyano-(4-fluoro-3-phenoxyphenyl)-methyl-3-(2,2-dichloroethenyl)-2,2-dimethylcyclopropancarboxylat, (Pentafluorphenyl)-methyl))-1R, 3R-3-(2,2-dichlorethenyl)-2,2-dimethylcyclopropancarboxylat, mit N,N-Dimethyl-N'-phenyl-N'-(fluordichlormethylthio)-sulfamid oder N,N-Dimethyl-N'-p-tolyl-N'(dichlorfluormethylthio)-sulfamid
und
0,1 - 25Gew.-%, vorzugsweise
1 - 18 Gew.-%,
(berechnet als Feststoff) mindestens eines organisch-chemischen Bindemittels und/oder Fixierungsmittels oder Weichmachers und das Gewichtsverhältnis des Gesamtanteiles an organisch-chemischen Bindemittel und/oder Fixierungsmittel oder Weichmacher zu dem Gesamtanteil des öligen oder ölartigen schwerflüchtigen, organisch-chemischen Lösungsmittels oder Lösungsmittelgemisches beträgt
1 : 1.2 bis 1 : 99, vorzugsweise
1 : 2 bis 1 : 25.

Vorteilhaft besitzt das ölige oder ölartige, schwerflüchtige, organisch-chemische Lösungsmittel oder Lösungsmittelgemisch eine Verdunstungszahl über 35 und einen Flammpunkt oberhalb 30 °C,

Gemäß einer weiteren Ausführungsform sind
0,5 bis 23 Gew.-%, vorzugsweise
2 bis 15 Gew.-%,
des organisch-chemischen, schwerflüchtigen Lösungsmittels bzw. Lösungsmittelgemisches mit einem Flammpunkt oberhalb 30 °C durch die gleiche Menge eines oder mehrerer organisch-chemischer Bindemittel und/oder Fixierungsmittel ersetzt, wobei als organisch-chemische Bindemittel und/oder Fixierungsmittel solche eingesetzt werden, die in dem Lösungsmittel bzw. Lösungsmittelgemisch verteilbar bzw. emulgierbar, vorzugsweise jedoch löslich sind, wobei der Ersatz mit der Maßgabe enfolgt, daß die erhaltene Mischung bzw. das erhaltene Lösungsmittelgemisch ebenfalls einen Flammpunkt über 30 °C aufweist und das organisch-chemische Lösungsmittel bzw. Lösungsmittelgemisch ein öliges oder ölartiges Lösungsmittel ist.

Nach einer bevorzugten Ausführungsform besteht das anwendungsfertige Mittel zum Konservieren von Holz und Holzwerkstoffen aus
0,001 - 5 Gew.-%, vorzugsweise
0,2 - 2 Gew.-%,
1-[[2-(2,4-dichlorphenyl)-1,3-dioxolan-2-yl]methyl]-1H-1,2,4-triazol,
0,001 - 3 Gew.-%, vorzugsweise
0,2 - 2 Gew.-%,
Cyano-(4-fluoro-3-phenoxyphenyl)-methyl -3-(2,2-dichloroethenyl)-2,2-dimethylcyclopropancarboxylat, oder (-(Pentafluorophenyl)-methyl)) -1R, 3R-3-(2,2-dichlorethenyl)-2,2-dimethylcyclopropancarboxylat, oder eines Cyano-(4-fluoro-3-phenoxyphenyl)-methyl-3-(2,2-dichloroethenyl)-2,2-dimethylcyclopropancarboxylat, (Pentafluorphenyl)-methyl))-1R, 3R-3-(2,2-dichlorethenyl)-2,2-dimethylcyclopropancarboxylat, mit N,N-Dimethyl-N'-phenyl-N'-(fluordichlormethylthio)-sulfamid oder N,N-Dimethyl-N'-p-tolyl-N'-(dichlorfluormethylthio)-sulfamid und
0,1 - 28 Gew.-%, vorzugsweise
1 - 18 Gew.-%,
mindestens eines organisch-chemischen Bindemittels und/oder Fixierungsmittels oder Weichmachers,
0 - 5 Gew.-%, vorzugsweise
0,01 - 4 Gew.-%,
mindestens eines anderen in dem organisch-chemischen Lösungsmittel oder Lösungsmittelgemisch löslichen Biozides oder Biozidgemisches,
0 - 8 Gew.%, vorzugsweise
0,1 - 4 Gew.-%,
mindestens eines wasserlöslichen und/oder wasserunlöslichen Farbstoffes, Farbpigmentes und/oder Korrosionsschutzmittels, Siccatives und/oder UV-Stabilisators und
99,899 Gew.-% - mehr als 75 Gew.-%, vorzugsweise
98,49 Gew.-% - mehr als 90 Gew.-%,
des schwerflüchtigen, organisch-chemischen Lösungsmittels oder Lösungsmittelgemisches

Die Erfindung betrifft weiterhin ein Verfahren zur Herstellung des erfindungsgemäßen Mittels zum Konservieren von Holz und Holzwerkstoffen.

Gemäß diesem Verfahren werden die Wirkbestandteile des Mittels bei Temperaturen von -5 °C bis 80 °C, vorzugsweise 15 °C bis 45 °C, und bei Drücken von 400 mm Hg bis 850 mm Hg (0.5332 bis 1,1332 bar) vorzugsweise 600 mm Hg bis 790 mm Hg (0.7999 bis 1,0532 bar) mit dem Lösungsmittel sowie den anderen Bestandteilen versetzt.

Beispiele:

1. Holzkonservierungsmittel mit termitizider Wirkung:
1-[[2-(2,4-dichlorphenyl)-1,3-dioxolan-2-yl]-methyl]-1H-1,2,4-triazol
(Azaconazol) 1 %
Cyano- (4-fluoro-3-phenoxyphenyl)-methyl-3-(2,2-dichloroethenyl)-2,2-dimethylcyclopropancarboxylat
(Cyfluthrin) 0,1 %
Dibutylphthalat 4,0 %
Spindelöl 10,0 %
Testbenzin (Gemisch aliphatischer und aromatischer Kohlenwasserstoffe) 84,9 %

2. Lasurartiges Holzkonservierungsmittel mit termitizider Wirkung:
1-[[2-(2,4-dichlorphenyl)-1,3-dioxolan-2-yl]-methyl]-1H-1,2,4-triazol
(Azaconazol) 0,35 %
Cyano- (4-fluoro-3-phenoxyphenyl)-methyl-3-(2,2-dichloroethenyl)-2,2-dimethylcyclopropancarboxylat
(Cyfluthrin) 0,1 %
Pigment 0,5 %
Alkydharz (70%ig) 10,0 %
Antiabsetzmittel 0,2 %
Sikkativ 0,2 %
Testbenzin (Gemisch aliphatischer und aromatischer Kohlenwasserstoffe) 88,65 %

## Patentansprüche

**1.** Mittel zum Konservieren von Holz und Holzwerkstoffen auf der Basis von oder unter Mitverwendung von

1-[[2-(2,4-dichlorphenyl)-1,3-dioxolan-2-yl] methyl]-1H-1,2,4-triazol

und mindestens eines Insektizides sowie ggf. Verarbeitungshilfs- und/oder Zusatzmittels, eines organisch-chemischen Bindemittels und/oder Fixierungsmittels, Farbstoffes, Pigmentes, Farbstoff- oder Pigmentgemisches, dadurch gekennzeichnet, daß das Mittel

0,001 - 5 Gew.-%

1-[[2-(2,4-dichlorphenyl)-1,3-dioxolan-2-yl] methyl]-1H-1,2,4-triazol

und

0,001 - 3 Gew.-%,

Cyano- (4-fluoro-3-phenoxyphenyl)-methyl-3-(2,2-dichloroethenyl)-2,2-dimethylcyclopropancarboxylat oder (-(Pentafluorphenyl)-methyl))-1R, 3R-3-(2,2-dichlorethenyl)-2,2-dimethylcyclopropancarboxylat oder eines Gemisches von Cyano-(4-fluoro-3-phenoxyphenyl)-methyl-3-(2,2-dichloroethenyl)-2,2-dimethylcyclopropancarboxylat und/oder (-(Pentafluorphenyl)-methyl))-1R, 3R-3-(2,2-dichlorethenyl)-2,2-dimethylcyclopropancarboxylat mit N,N-Dimethyl-N'-phenyl-N'-(fluordichlormethylthio)-sulfamid oder N,N-Dimethyl-N'-p-tolyl-N'-(dichlorfluormethylthio)-sulfamid und

mehr als 75 Gew.-%,

mindestens eines öligen oder ölartigen, schwerflüchtigen, organisch-chemischen Lösungsmittels enthält.

**2.** Mittel nach Anspruch 1, dadurch gekennzeichnet, daß das Mittel

0,2 - 2 Gew.-%

1-[[2-(2,4-dichlorphenyl)-1,3-dioxolan-2-yl] methyl]-1H-1,2,4-triazol

und

0,2 - 2 Gew.-%

Cyano- (4-fluoro-3-phenoxyphenyl)-methyl-3-(2,2-dichloroethenyl)-2,2-dimethylcyclopropancarboxylat oder (-(Pentafluorphenyl)-methyl))-1R, 3R-3-(2,2-dichlorethenyl)-2,2-dimethylcyclopropancarboxylat oder eines Gemisches von Cyano-(4-fluoro-3-phenoxyphenyl)-methyl-3-(2,2-dichloroethenyl)-2,2-dimethylcyclopropancarboxylat und/oder (-(Pentafluorphenyl)-methyl))-1R, 3R-3-(2,2-dichlorethenyl)-2,2-dimethylcyclopropancarboxylat mit N,N-Dimethyl-N'-phenyl-N'-(fluordichlormethylthio)-sulfamid oder N,N-Dimethyl-N'-p-tolyl-N'-(dichlorfluormethylthio)-sulfamid und

mehr als 90 Gew.-%,

mindestens eines öligen oder ölaratigen, schwerflüchtigen, organisch-chemischen Lösungsmittels enthält.

3. Mittel oder Konzentrat nach Ansprüchen 1 und 2, dadurch gekennzeichnet, daß das Mittel

0,1 - 25 Gew.-% (berechnet als Feststoff), vorzugsweise

1 - 18 Gew.-%,

mindestens eines Bindemittels und/oder Fixierungsmittels enthält.

4. Mittel oder Konzentrat nach Anspruch 3, dadurch gekennzeichnet, daß das Gewichtsverhältnis von Bindemittel, Fixierungsmittel und/oder eines deren Gemische zu dem Lösungsmittel oder Lösungsmittelgemisch

8,5 : 1 bis 1 : 99

beträgt.

5. Mittel oder Konzentrat nach einem oder mehreren der Ansprüche 3 oder 4, dadurch gekennzeichnet, daß das organisch-chemische Bindemittel oder Bindemittelgemisch teilweise durch mindestens einen Weichmacher ersetzt ist.

6. Mittel zum Konservieren von Holz und Holzwerkstoffen nach einem oder mehreren der Ansprüche 1 - 5, dadurch gekennzeichnet, daß das Mittel (das anwendungsfertige Mittel)

0,001 - 5 Gew.-%, vorzugsweise
0,2 - 2 Gew.-%,

1-[[2-(2,4-dichlorphenyl)-1,3-dioxolan-2-yl] methyl]-1H-1,2,4-triazol,

0,001 - 3 Gew.-%, vorzugsweise
0,2 - 2 Gew.-%,

Cyano- (4-fluoro-3-phenoxyphenyl)-methyl-3-(2,2-dichloroethenyl)-2,2-dimethylcyclopropancarboxylat oder (-(Pentafluorphenyl)-methyl))-1R, 3R-3-(2,2-dichlorethenyl)-2,2-dimethylcyclopropancarboxylat oder eines Gemisches von Cyano-(4-fluoro-3-phenoxyphenyl)-methyl-3-(2,2-dichloroethenyl)-2,2-dimethylcyclopropancarboxylat oder (-(Pentafluorphenyl)-methyl))-1R, 3R-3-(2,2-dichlorethenyl)-2,2-dimethylcyclopropancarboxylat mit N,N-Dimethyl-N'-phenyl-N'-(fluordichlormethylthio)-sulfamid oder N,N-Dimethyl-N'-p-tolyl-N'-(dichlorfluormethylthio)-sulfamid und

0,1 - 25 Gew.-%, vorzugsweise
1 - 18 Gew.-%,

(berechnet als Feststoff) mindestens eines organisch-chemischen Bindemittels und/oder Fixierungsmittels oder Weichmachers enthält und das Gewichtsverhältnis des Gesamtanteiles an organisch-chemischen Bindemittel und/oder Fixierungsmittel oder Weichmacher zu dem Gesamtanteil des öligen oder ölartigen, schwerflüchtigen, organisch-chemischen Lösungsmittels oder Lösungsmittelgemisches

1 : 1,2 bis 1 : 99, vorzugsweise
1 : 2 bis 1 : 25,

beträgt.

7. Mittel zum Konservieren von Holz und Holzwerkstoffen nach einem oder mehreren der Ansprüche 1 bis 6, dadurch gekennzeichnet, daß das ölige oder ölartige, organisch-chemische, schwerflüchtige Lösungsmittel oder Lösungsmittelgemisch eine Verdunstungszahl über 35 und einem Flammpunkt oberhalb 30 °C besitzt.

8. Mittel zum Konservieren von Holz und Holzwerkstoffen nach Anspruch 7, dadurch gekennzeichnet, daß

0,5 bis 23 Gew.-%, vorzugsweise
2 bis 15 Gew.-%,

des organisch-chemischen, schwerflüchtigen Lösungsmittels bzw. Lösungsmittelgemisches mit einem Flammpunkt oberhalb 30 °C durch die gleiche Menge eines oder mehrerer organisch-chemischer Bindemittel und/oder Fixierungsmittel ersetzt sind, wobei als organisch-chemische Bindemittel und/oder Fixierungsmittel solche eingesetzt werden, die in dem Lösungsmittel bzw. Lösungsmittel verteilbar bzw. emulgierbar, vorzugsweise jedoch löslich sind, wobei der Ersatz mit der Maßgabe erfolgt, daß die erhaltene Mischung bzw. das erhaltene Lösungsmittelgemisch ebenfalls einen Flammpunkt über 30 °C aufweist und das organisch-chemische Lösungsmittel bzw. Lösungsmittelgemisch ein öliges oder ölartiges Lösungsmittel ist.

**9.** Mittel zum Konservieren von Holz und Holzwerkstoffen nach einem oder mehreren der Ansprüche 1 - 8, dadurch gekennzeichnet, daß das anwendungsfertige Mittel aus

0,001 - 5 Gew.-%, vorzugsweise
0,2 - 2 Gew.-%,

1-[[2-(2,4-dichlorphenyl)-1,3-dioxolan-2-yl] methyl]-1H-1,2,4-triazol,

0,001 - 3 Gew.-%, vorzugsweise
0,2 - 2 Gew.-%,

Cyano- (4-fluoro-3-phenoxyphenyl)-methyl-3-(2,2-dichloroethenyl)-2,2-dimethylcyclopropancarboxylat oder (-(Pentafluorphenyl)-methyl))-1R, 3R-3-(2,2-dichlorethenyl)-2,2-dimethylcyclopropancarboxylat oder eines Gemisches von Cyano-(4-fluoro-3-phenoxyphenyl)-methyl-3-(2,2-dichloroethenyl)-2,2-dimethylcyclopropancarboxylat oder (-(Pentafluorphenyl)-methyl))-1R, 3R-3-(2,2-dichlorethenyl)-2,2-dimethylcyclopropancarboxylat mit N,N-Dimethyl-N'-phenyl-N'-(fluordichlormethylthio)-sulfamid oder N,N-Dimethyl-N'-p-tolyl-N'-(dichlorfluormethylthio)-sulfamid und

0,1 - 28 Gew.-%,vorzugsweise
1 - 18 Gew.-%,

mindestens eines organisch-chemischen Bindemittels und/oder Fixierungsmittels oder Weichmachers,

0 - 5 Gew.-%, vorzugsweise
0,01 - 4 Gew.-%,

mindestens eines anderen in dem organisch-chemischen Lösungsmittel oder Lösungsmittelgemisch löslichen Biozides oder Biozidgemisches,

0 - 8 Gew.-%, vorzugsweise
0,1 - 4 Gew.-%,

mindestens eines wasserlöslichen und/oder wasserunlöslichen Farbstoffes, Farbpigmentes und/oder Korrosionsschutzmittels, Siccatives und/oder UV-Stabilisators und

99,899 Gew.-% - 51 Gew.-%, vorzugsweise
98,49 Gew.-% - 70 Gew.-%,

des organisch-chemischen, schwerflüchtigen Lösungsmittels oder Lösungsmittelgemisches besteht.

**10.** Verfahren zur Herstellung des Mittels oder Konzentrates zum Konservieren von Holz und Holzwerkstoffen nach einem oder mehreren der Ansprüche 1 bis 11, dadurch gekennzeichnet, daß die Wirkbestandteile des Mittels oder Konzentrats bei Temperaturen von

-5 °C bis 80 °C, vorzugsweise
15 °C bis 45 °C,

und bei Drücken von

400 mm Hg bis 850 mm Hg (0,5332 bis 1,1332 bar,
vorzugsweise
600 mm Hg bis 790 mm Hg (0,7999 bis 1,0532 bar)

mit dem Verdünnungsmittel sowie den anderen Bestandteilen versetzt werden.

## Claims

**1.** Agent for preserving wood and timber materials on the basis of or with the joint use of

1-[[2-(2,4-dichlorophenyl)-1,3-dioxolan-2-yl]-methyl]-1H-1,2,4-triazole

and at least one insecticide and also optionally processing aid and/or additive, an organic-chemical binding agent and/or fixing agent, dye, pigment, dye or pigment mixture, characterised in that the agent contains

0.001 - 5% by weight

1-[[2-(2,4-dichlorophenyl)-1,3-dioxolan-2-yl]-methyl]-1H-1,2,4-triazole

and

0.001 - 3% by weight

cyano-(4-fluoro-3-phenoxyphenyl)-methyl-3-(2,2-dichloroethenyl)-2,2-dimethylcyclopropane carboxylate or ((pentafluorophenyl)-methyl))-1R,3R-3-(2,2-dichloroethenyl)-2,2-dimethylcyclopropane carboxylate or a mixture of cyano-(4-fluoro-3-phenoxyphenyl)-methyl-3-(2,2-dichloroethenyl)-2,2-dimethylcyclopropane carboxylate and/or ((pentafluorophenyl)-methyl))-1R,3R-3-(2,2-dichloroethenyl)-2,2-dimethylcyclopropane carboxylate with N,N-dimethyl-N'-phenyl-N'-(fluorodichloromethylthio)-sulphamide or N,N-dimethyl-N'-p-tolyl-N'-(dichlorofluoromethylthio)-sulphamide and

more than 75% by weight

of at least one oily or oil-like, poorly volatile, organic-chemical solvent.

2. Agent according to Claim 1, characterised in that the agent contains

0.2 - 2% by weight

1-[[2-(2,4-dichlorophenyl)-1,3-dioxolan-2-yl]-methyl]-1H-1,2,4-triazole

and

0.2 - 2% by weight

cyano-(4-fluoro-3-phenoxyphenyl)-methyl-3-(2,2-dichloroethenyl)-2,2-dimethylcyclopropane carboxylate or ((pentafluorophenyl)-methyl))-1R,3R-3-(2,2-dichloroethenyl)-2,2-dimethylcyclopropane carboxylate or a mixture of cyano-(4-fluoro-3-phenoxyphenyl)-methyl-3-(2,2-dichloroethenyl)-2,2-dimethylcyclopropane carboxylate and/or ((pentafluorophenyl)-methyl))-1R,3R-3-(2,2-dichloroethenyl)-2,2-dimethylcyclopropane carboxylate with N,N'-dimethyl-N'-phenyl-N'-(fluorodichloromethylthio)-sulphamide or N,N-dimethyl-N'-p-tolyl-N'-(dichlorofluoromethylthio)-sulphamide and

more than 90% by weight

of at least one oily or oil-like, poorly volatile, organic-chemical solvent.

3. Agent or concentrate according to Claims 1 and 2, characterised in that the agent contains

0.1 - 25% by weight (calculated as solid), preferably

1 - 18% by weight,

of at least one binding agent and/or fixing agent.

4. Agent or concentrate according to Claim 3, characterised in that the weight ratio of binding agent, fixing agent and/or one of the mixtures thereof to the solvent or solvent mixture is

8.5 : 1 to 1 : 99.

5. Agent or concentrate according to one or more of Claims 3 or 4, characterised in that the organic-chemical binding agent or binding agent mixture is partially replaced by at least one softening agent.

6. Agent for preserving wood and timber materials according to one or more of Claims 1 - 5, characterised in that the agent (the agent ready for use) contains

0.001 - 5% by weight, preferably
0.2 - 2% by weight,

1-[[2-(2,4-dichlorophenyl)-1,3-dioxolan-2-yl]-methyl]-1H-1,2,4-triazole,

0.001 - 3% by weight, preferably
0.2 - 2% by weight,

cyano-(4-fluoro-3-phenoxyphenyl)-methyl-3-(2,2-dichloroethenyl)-2,2-dimethylcyclopropane carboxylate or ((pentafluorophenyl)-methyl))-1R,3R-3-(2,2-dichloroethenyl)-2,2-dimethylcyclopropane carboxylate or a mixture of cyano-(4-fluoro-3-phenoxyphenyl)-methyl-3-(2,2-dichloroethenyl)-2,2-dimethylcyclopropane carboxylate or ((pentafluorophenyl)-methyl))-1R,3R-3-(2,2-dichloroethenyl)-2,2-dimethylcyclopropane carboxylate with N,N-dimethyl-N'-phenyl-N'-(fluorodichloromethylthio)-sulphamide or N,N-dimethyl-N'-p-tolyl-N'-(dichlorofluoromethylthio)-sulphamide and

0.1 - 25% by weight, preferably
1 - 18% by weight,

(calculated as solid) of at least one organic-chemical binding agent and/or fixing agent or softening agent and the weight ratio of the total content of organic-chemical binding agent and/or fixing agent or softening agent to the total content of the oily or oil-like, poorly volatile, organic-chemical solvent or solvent mixture is

1 : 1.2 to 1 : 99, preferably
1 : 2 to 1 : 25.

7. Agent for preserving wood and timber materials according to one or more of Claims 1 to 6, characterised in that the oily or oil-like, organic-chemical, poorly volatile solvent or solvent mixture has an evaporation number of more than 35 and a flash point of above 30 °C.

8. Agent for preserving wood and timber materials according to Claim 7, characterised in that

0.5 to 23% by weight, preferably
2 to 15% by weight,

of the organic-chemical, poorly volatile solvent or solvent mixture having a flash point of above 30° C is replaced by the same quantity of one or more organic-chemical binding agents and/or fixing agents, with those organic-chemical binding agents and/or fixing agents which can be dispersed or emulsified, but preferably dissolved, in the solvent or solvent [sic] being used, the replacement taking place with the proviso that the resulting mixture or the resulting solvent mixture likewise has a flash point of above 30° C and the organic-chemical solvent or solvent mixture is an oily or oil-like solvent.

**9.** Agent for preserving wood and timber materials according to one or more of Claims 1 - 8, characterised in that the agent ready for use consists of

0.001 - 5% by weight, preferably
0.2 - 2% by weight,

1-[[2-(2,4-dichlorophenyl)-1,3-dioxolan-2-yl]-methyl]-1H-1,2,4-triazole,

0.001 - 3% by weight, preferably
0.2 - 2% by weight,

cyano-(4-fluoro-3-phenoxyphenyl)-methyl-3-(2,2-dichloroethenyl)-2,2-dimethylcyclopropane carboxylate or ((pentafluorophenyl)-methyl))-1R,3R-3-(2,2-dichloroethenyl)-2,2-dimethylcyclopropane carboxylate or a mixture of cyano-(4-fluoro-3-phenoxyphenyl)-methyl-3-(2,2-dichloroethenyl)-2,2-dimethylcyclopropane carboxylate or ((pentafluorophenyl)-methyl))-1R,3R-3-(2,2-dichloroethenyl)-2,2-dimethylcyclopropane carboxylate with N,N-dimethyl-N'-phenyl-N'-(fluorodichloromethylthio)-sulphamide or N,N-dimethyl-N'-p-tolyl-N'-(dichlorofluoromethylthio)-sulphamide and

0.1 - 28% by weight, preferably
1 - 18% by weight,

of at least one organic-chemical binding agent and/or fixing agent or softening agent,

0 - 5% by weight, preferably
0.01 - 4% by weight,

of at least one other biocide or biocide mixture which is soluble in the organic-chemical solvent or solvent mixture,

0 - 8% by weight, preferably
0.1 - 4% by weight,

of at least one water-soluble and/or water-insoluble dye, colour pigment and/or corrosion protection agent, siccative and/or UV-stabiliser and

99.899% by weight - 51% by weight, preferably
98.49% by weight - 70% by weight,

of the organic-chemical, poorly volatile solvent or solvent mixture.

**10.** Method for producing the agent or concentrate for the preservation of wood and timber materials according to one of Claims 1 to 11 [sic], characterised in that the diluent and the other constituents are added to the active constituents of the agent or concentrate at temperatures of

-5° C to 80° C, preferably
15° C to 45° C,

and at pressures of

400 mm Hg to 850 mm Hg (0.5332 to 1.1332 bar,
preferably
600 mm Hg to 790 mm Hg (0.7999 to 1.0532 bar).

**Revendications**

**1.** Agent pour la conservation du bois et des matériaux en bois, à base de ou utilisant du

1-[[2-(2,4-dichlorophényl)-1,3-dioxolane-2-yl]-méthyl]-1H-1,2,4-triazol

et au moins un insecticide ainsi que, le cas échéant, un agent d'ouvrabilité et/ou un adjuvant, un agent liant et/ou un fixatif, colorant, pigment, mélange de colorants ou de pigments organo-chimique, caractérisé en ce que l'agent contient

0,001 à 5 % en poids

de 1-[[2-(2,4-dichlorophényl)-1,3-dioxolane-2-yl]-méthyl]-1H-1,2,4-triazol
et

0,001 à 3 % en poids

de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de ((pentafluorophényl)-méthyl))-1R,3R-3-(2,2-dichloroéthényle) ou d'un mélange de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de (-(pentafluorophényl)-méthyl))-1R,3R-3-(2,2-dichloroéthényle) avec du N,N-diméthyl-N'-phényl-N'-(fluorodichlorométhyl-thio)-sulfamide ou du N,N-diméthyl-N'-p-tolyl-N'-(dichlorofluorométhyl-thio)-sulfamide et

plus de 75 % en poids

d'au moins un solvant ou mélange de solvants organo-chimique, huileux ou oléagineux, peu volatil.

2. Agent selon la revendication 1, caractérisé en ce qu'il contient

0,2 à 2 % en poids

de 1-[[2-(2,4-dichlorophényl)-1,3-dioxolane-2-yl]-méthyl]-1H-1,2,4-triazol
et

0,2 à 2 % en poids

de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de ((pentafluorophényl)-méthyl))-1R,3R-3-(2,2-dichloroéthényle) ou d'un mélange de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de (-(pentafluorophényl)-méthyl))-1R,3R-3-(2,2-dichloroéthényle) avec du N,N-diméthyl-N'-phényl-N'-(fluorodichlorométhyl-thio)-sulfamide ou du N,N-diméthyl-N'-p-tolyl-N'-(dichlorofluorométhyl-thio)-sulfamide et

plus de 90 % en poids

d'au moins un solvant ou mélange de solvants organo-chimique, huileux ou oléagineux, peu volatil.

3. Agent ou concentrat selon les revendications 1 et 2, caractérisé en ce qu'il contient

0,1 à 25 % en poids (calculé sous forme de substance solide), de préférence
1 à 18 % en poids,

d'au moins un agent liant et/ou fixatif.

4. Agent ou concentrat selon la revendication 3, caractérisé en ce que le rapport en poids entre l'agent liant, le fixatif et/ou l'un de leurs mélanges et le solvant ou mélange de solvants est compris entre

8,5 : 1 et 1 : 99.

5. Agent ou concentrat selon l'une ou plusieurs des revendications 3 ou 4, caractérisé en ce que l'agent liant ou mélange d'agents liants organo-chimique est remplacé partiellement par au moins un plastifiant.

6. Agent pour la conservation du bois et des matériaux en bois selon l'une ou plusieurs des revendications 1 à 5, caractérisé en ce que l'agent (l'agent prêt à l'emploi) contient

0,001 à 5 % en poids, de préférence
0,2 à 2 % en poids,

de 1-[[2-(2,4-dichlorophényl)-1,3-dioxolane-2-yl]-méthyl]-1H-1,2,4-triazol,

0,001 à 3 % en poids, de préférence
0,2 à 2 % en poids,

de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de ((pentafluorophényl)-méthyl))-1R,3R-3-(2,2-dichloroéthényle) ou d'un mélange de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de (-(pentafluorophényl)-méthyl))-1R,3R-3-(2,2-dichloroéthényle) avec du N,N-diméthyl-N'-phényl-N'-(fluorodichlorométhyl-thio)-sulfamide ou du N,N-diméthyl-N'-p-tolyl-N'-(dichlorofluorométhyl-thio)-sulfamide et

0,1 à 25 % en poids, de préférence
1 à 18 % en poids,

(calculé sous forme de substance solide) d'au moins un agent liant et/ou fixatif ou plastifiant organo-chimique et en ce que le rapport pondéral entre la quantité totale d'agent liant et/ou de fixatif ou de plastifiant organo-chimique et

la quantité totale de solvant ou mélange de solvants organo-chimique, huileux ou oléagineux, peu volatil est compris entre

1 : 1,2 et 1 : 99, de préférence entre
1 : 2 et 1 : 25.

**7.** Agent pour la conservation du bois et des matériaux en bois selon l'une ou plusieurs des revendications 1 à 6, caractérisé en ce que le solvant ou mélange de solvants organo-chimique, huileux ou oléagineux, peu volatil possède un indice d'évaporation supérieur à 35 et un point éclair supérieur à 30 °C.

**8.** Agent pour la conservation du bois et des matériaux en bois selon la revendication 7, caractérisé en ce que

0,5 à 23 % en poids, de préférence
2 à 15 % en poids,

du solvant ou mélange de solvants organo-chimique, peu volatil, ayant une point éclair supérieur à 30 °C, sont remplacés par la même quantité d'un ou de plusieurs agents liants et/ou fixatifs organo-chimiques, en utilisant comme agents liants et/ou fixatifs organo-chimiques ceux qui peuvent être dispersés ou émulsifiés dans le solvant ou mélange de solvants, de préférence ceux qui sont solubles, le remplacement se faisant à la condition que le mélange obtenu ou le mélange de solvants obtenu présente également un point éclair supérieur à 30 °C et que le solvant ou mélange de solvants organo-chimique soit un solvant huileux ou oléagineux.

**9.** Agent pour la conservation du bois et des matériaux en bois selon l'une ou plusieurs des revendications 1 à 8, caractérisé en ce que l'agent prêt à l'emploi est constitué par

0,001 à 5 % en poids, de préférence par
0,2 à 2 % en poids,

de 1-[[2-(2,4-dichlorophényl)-1,3-dioxolane-2-yl]-méthyl]-1H-1,2,4-triazol,

0,001 à 3 % en poids, de préférence
0,2 à 2 % en poids,

de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de ((pentafluorophényl)-méthyl))-1R,3R-3-(2,2-dichloroéthényle) ou d'un mélange de 2,2-diméthylcyclopropanecarboxylate de cyano-(4-fluoro-3-phénoxyphényl)-méthyl-3-(2,2-dichloroéthényle) ou de 2,2-diméthylcyclopropanecarboxylate de (-(pentafluorophényl)-méthyl))-1R,3R-3-(2,2-dichloroéthényle) avec du N,N-diméthyl-N'-phényl-N'-(fluorodichlorométhyl-thio)-sulfamide ou du N,N-diméthyl-N'-p-tolyl-N'-(dichlorofluorométhyl-thio)-sulfamide et

0,1 à 28 % en poids, de préférence
1 à 18 % en poids,

d'au moins un agent liant et/ou fixatif ou plastifiant organo-chimique,

0 à 5 % en poids, de préférence
0,01 à 4 % en poids,

d'au moins un autre biocide ou mélange de biocides soluble dans le solvant ou mélange de solvants organo-chimique,

0 à 8 % en poids, de préférence
0,1 à 4 % en poids,

d'au moins un colorant, pigment colorant et/ou agent de protection contre la rouille, siccatif et/ou agent de stabilisation contre les rayons UV, soluble et/ou insoluble dans l'eau, et

99,899 % en poids à 51 % en poids,
de préférence
98,49 % en poids à 70 % en poids,

du solvant ou mélange de solvants organo-chimique, peu volatil.

**10.** Procédé pour la fabrication de l'agent ou du concentrat pour la conservation du bois et des matériaux en bois selon l'une ou plusieurs des revendications 1 à 11, caractérisé en ce que les composants actifs de l'agent ou du concentrat sont ajoutés, à des températures comprises entre

-5 °C et 80 °C, de préférence entre
15 °C et 45 °C,

et à des pressions comprises entre

400 mm de Hg et 850 mm de Hg (0,5332 et 1,1332 bars),
de préférence entre
600 mm de Hg et 790 mm de Hg (0,7999 et 1,0532 bars),

au diluant ainsi qu'aux autre composants.